# EUROPÄISCHE PATENTANMELDUNG

(11) **EP 2 079 035 A2**
(43) Veröffentlichungstag der Anmeldung: **15.07.2009**
(21) Anmeldenummer: 08106011.3
(22) Anmeldetag: 18.12.2008
(51) Int. Cl.: G06K 7/00

(54) **Karteneinzugsvorrichtung**

(30) Priorität: 10.01.2008 DE 102008003773
(71) Anmelder: Continental Automotive GmbH, 30165 Hannover (DE)
(72) Erfinder: Wahler, Torsten, Bad Dürrheim 78073 (DE)

(57) **Zusammenfassung**

Die Erfindung bezieht sich auf eine Karteneinzugsvorrichtung, insbesondere für einen Fahrtschreiber in einem Kraftfahrzeug, mit einer Transporteinrichtung 4, die einen Aufnahmeschlitz 14 mit einer Einführöffnung 16 zur Aufnahme einer Chipkarte 15 aufweist, wobei die Transporteinrichtung 4 in einem eine entsprechend dem Aufnahmeschlitz 14 gerichtete Aufnahmeöffnung 37 aufweisenden Schacht 3 geführt zwischen einer Ausfahrposition und einer Einzugsposition translatorisch durch einen Antrieb bewegbar antreibbar ist. Dabei weist die Chipkarte 15 einen Datenspeicher 18 auf, der bei vollständig in dem Schacht 3 befindlicher Chipkarte mit feststehenden Kontakten kontakierbar und mit einer elektronischen Lese- und Speichereinheit verbindbar ist. Eine Verriegelungseinheit weist ein Verriegelungselement auf, das zwischen einer Entriegelungsstellung und einer Verriegelungsstellung bewegbar ist und durch das mindestens ein Verriegelungsteil 34 zwischen einer Einführstellung und einer Verschlussstellung bewegbar antreibbar ist, wobei durch das bei vollständig in den Schacht 3 eingeführter Chipkarte in der Verschlussstellung befindliche Verriegelungsteil 34 die Aufnahmeöffnung 37 verschlossen und das Verriegelungsteil 34 in der Verschlussstellung arretierbar ist.

## Beschreibung

Die Erfindung bezieht sich auf eine Karteneinzugsvorrichtung, insbesondere für einen Fahrtschreiber in einem Kraftfahrzeug, mit einer Transporteinrichtung, die einen Aufnahmeschlitz mit einer Einführöffnung zur Aufnahme einer Karte aufweist, wobei die Transporteinrichtung in einem eine entsprechend dem Aufnahmeschlitz gerichtete Aufnahmeöffnung aufweisenden Schacht geführt zwischen einer Ausfahrposition und einer Einzugsposition translatorisch durch einen Antrieb bewegbar antreibbar ist, wobei die Karte einen Datenspeicher aufweist, der bei vollständig in dem Schacht befindlicher Karte mit feststehenden Kontakten kontaktierbar und mit einer elektronischen Lese- und Speichereinheit verbindbar ist, mit einer Verriegelungseinheit, die ein Verriegelungselement aufweist, das zwischen einer Entriegelungsstellung und einer Verriegelungsstellung bewegbar ist und durch das mindestens ein Verriegelungsteil zwischen einer Einführstellung und einer Verschlussstellung bewegbar antreibbar ist, wobei durch das bei vollständig in den Schacht eingeführter Karte in der Verschlussstellung befindliche Verriegelungsteil die Aufnahmeöffnung verschlossen und das Verriegelungsteil in der Verschlussstellung arretierbar ist.

Derartige digitale Karteneinzugsvorrichtungen von digitalen Fahrtschreibern verwenden als Karte eine Chipkarte, wobei bei in die Karteneinzugsvorrichtung eingeführter Chipkarte ein Austausch von fahrer- und fahrzeugspezifischen Daten zwischen der Chipkarte und der Lese- und Speichereinheit erfolgt.

Während der Aufzeichnung von Daten bei der Benutzung des Fahrzeugs darf die Chipkarte unter keinen Umständen von außen entnommen oder aus der Karteneinzugsvorrichtung ausgeworfen werden können.

Dazu muss die Chipkarte vollständig in die Karteneinzugsvorrichtung eingeführt und verriegelt werden und die Verriegelung muss absolut sicher gegen Manipulation sein.

Bei einer Karteneinzugsvorrichtung der eingangs genannten Art ist es bekannt, dass zwei Bewegungsabläufe angetrieben werden. Zum einen ist dies der Transport der Karte und zum anderen ist dies die Verriegelung. Dazu wird erst der Transport der Chipkarte abgeschlossen bis die Einzugsposition erreicht ist. Danach wird der Abtrieb abgekoppelt und die Verriegelung gestartet. Bei Auswurf der Chipkarte erfolgt dieser Vorgang in umgekehrter Reihenfolge.

Dazu ist eine aufwendige Mechanik erforderlich.

Aufgabe der Erfindung ist es daher eine Karteneinzugsvorrichtung der eingangs genannten Art zu schaffen, die bei einfachem Aufbau wenige Bauteile erfordert und eine korrekte Funktion gewährleistet.

Diese Aufgabe wird erfindungsgemäß dadurch gelöst, dass das Verriegelungselement einen in gleicher Bewegungsrichtung wie die Transporteinrichtung linear bewegbar geführten Schieber aufweist, der ein erstes Koppelelement besitzt, das in einer ersten Führungsbahn eines ersten Antriebsteils bewegbar geführt ist, welches um eine sich senkrecht zur Ebene der Karte erstreckende erste Drehachse durch den ersten Antrieb drehbar antreibbar ist, wobei sich die erste Führungsbahn von einem der ersten Drehachse ferneren Bereich zu einem der ersten Drehachse näheren Bereich erstreckenden Verriegelungsbereich aufweist und wobei das Verriegelungsteil an dem Schieber um eine zur ersten Drehachse parallele Anlenkachse schwenkbar angelenkt und um eine zur Anlenkachse parallele feste Verriegelungsachse schwenkbar gelagert ist.

Diese Ausbildung benötigt nur wenige einfache Bauteile zum Antrieb des Verriegelungsteils und einen einfachen Drehantrieb.

Durch den Verriegelungsbereich wirkt beim Verriegelungsvorgang eine Zugbewegung auf den Schieber, die wiederum die Schwenkbewegung des Verriegelungsteils bewirkt. Bei dem Entriegelungsvorgang erfolgt diese Bewegung umgekehrt.

Dabei kann das Verriegelungsteil ein Verschlussstück aufweisen, das zwischen seiner Entriegelungsstellung, in der es sich seitlich neben der Aufnahmeöffnung befindet, in seine Verschlussstellung vor der Aufnahmeöffnung schwenkbar ist.

Eine Verriegelung kann nur in einem seitlichen Randbereich der Aufnahmeöffnung erfolgen.

Besonders sicher ist eine Verriegelung, wenn in jedem seitlichen Randbereich der Aufnahmeöffnung ein Verriegelungsteil angeordnet ist, die gemeinsam von dem Schieber schwenkbar beaufschlagbar sein können.

Dazu kann der Schieber zentrisch zum Schacht angeordnet sein und zwei einander entgegengesetzt zu den Seitenrändern des Schachts gerichtete Schieberarme aufweisen, an deren freien Endbereichen die Anlenkachsen angeordnet sind.

Um eine verspannungsfreie Bewegungsübertragung zu ermöglichen, kann der Schieberarm einen die Anlenkachse bildenden Anlenkzapfen aufweisen, der in ein sich radial zur Verriegelungsachse gerichtetes Langloch eingreift.

Greift dabei das freie Ende des Anlenkzapfens in eine Führungsnut entsprechender Breite ein, die sich in Bewegungsrichtung des Schiebers erstreckt, so erfolgt damit auch eine Führung des Schiebers.

Zu einem einfach aufgebauten Schieberantrieb führt es, wenn das erste Koppelelement ein erster Kulissenstein und die erste Führungsbahn eine erste Kulissenbahn ist, in die das als erster Kurbelzapfen insbesondere runden Querschnitts ausgebildete erste Koppelelement eingreift.

Zum Drehantrieb des ersten Antriebsteils ist vorzugsweise das erste Antriebsteil ein erstes Antriebszahnrad, das z.B. über einen Schneckenantrieb drehbar sein kann.

Dabei kann die erste Führungsbahn sich aus einer über einen Winkel größer 90° und kleiner 180° erstreckenden zur ersten Drehachse konzentrischen Kreisbahn sowie dem sich daran anschließenden Verriegelungsbereich bestehen, so dass das Verriegelungselement um 180° drehbar ist und das eine Ende der ersten Führungsbahn die Einführstellung und das andere Ende der ersten Führungsbahn die Verschlussstellung definiert, wobei das Verriegelungselement durch den Antrieb reversibel antreibbar ist.

Um eine Beschädigung der Vorrichtung zu vermeiden, wenn bei teilweise eingezogener Karte die Karte von einer Bedienperson festgehalten wird und die Verriegelungsteile sich nicht in die Verschlussstellung bewegen lassen, kann die Kreisbahn einen Kreisbahnfortsatz aufweisen, der die Kreisbahn an ihrem dem Verriegelungsbereich zugewandten Ende auf eine Erstreckung von 180° ergänzt.

Anstelle sich in den Verriegelungsbereich hineinzubewegen, bewegt sich dann das Koppelelement weiter in den Kreisbahnfortsatz hinein, so dass keine Verriegelungsbewegung des Verriegelungselements erfolgt.

Besteht die erste Führungsbahn aus einer sich über einen Winkel größer 180° und kleiner 360° erstreckenden zur ersten Drehachse konzentrischen Kreisbahn sowie dem sich an das eine Ende der Kreisbahn anschließenden Verriegelungsbereich sowie einem Entriegelungsbereich, so dass das Verriegelungselement um 360° drehbar ist, wobei sich an das der Kreisbahn abgewandte Ende des Verriegelungsbereichs der Entriegelungsbereich anschließt und zu dem zweiten Ende der Kreisbahn führt, wobei die Mitte des Verlaufs der Kreisbahn die Einführstellung und der Übergang von dem Verriegelungsbereich zum Entriegelungsbereich die Verschlussstellung definiert und wobei das Verriegelungselement durch den Antrieb unidirektional antreibbar ist, so ist nur ein einfacher und kostengünstiger unidirektional antreibender Antrieb erforderlich.

Die Enden der Kreisbahn können durch einen Kreisbahnfortsatz miteinander verbunden sein, so dass der Kreisbahnfortsatz zur gleichen Funktion führt wie der o. g. Kreisbahnfortsatz.

Damit im Normalbetrieb das Einlaufen des Koppelelements in den Verriegelungsbereich sicher gestellt und ein Einlaufen in den Kreisbahnfortsatz vermieden wird, kann der Schieber auf die erste Drehachse zu federbelastet sein.

Zum Karteneinzug kann die Transporteinrichtung in dem Schacht geführt durch ein um eine zweite Drehachse drehbar antreibbares zweites Antriebsteil bewegbar antreibbar sein.

Ist dabei das zweite Antriebsteil in einer einzigen Drehrichtung drehbar antreibbar und weist ein zweites Koppelelement auf, das in einem Abstand zu der zweiten Drehachse angeordnet ist und entlang einer sich im Wesentlichen quer zur Erstreckung des Bewegungswegs der Transportvorrichtung erstreckenden zweiten Führungsbahn an der Transportvorrichtung bewegbar geführt ist, wobei sich das zweite Koppelelement in der Ausfahrposition zwischen den beiden Enden der zweiten Führungsbahn befindet, so kann bei einfachem Aufbau ein Antrieb verwendet werden, der sowohl für die Einzugsbewegung als auch für die Ausschubbewegung nur einen einzigen Drehsinn benötigt und somit die Verwendung eines kostengünstigen, nicht reversiblen Antriebs erlaubt.

Die zweite Führungsbahn kann sich gerade erstrecken.

In einer einfachen Ausbildung kann das zweite Koppelelement ein zweiter Kulissenstein und die zweite Führungsbahn eine zweite Kulissenbahn sein, in die das insbesondere als zweiter Kurbelzapfen runden Querschnitts ausgebildete zweite Koppelelement bewegbar eingreift.

Ist das zweite Antriebsteil ein zweites Antriebszahnrad, so kann in einfacher Weise ein Drehantrieb dadurch erfolgen, dass in das Antriebszahnrad z.B. eine Zylinderschnecke eingreift, die von einem Drehantrieb unidirektional drehbar antreibbar ist.

Eine große Einsparung von Bauteilen durch Doppelnutzung ist dadurch möglich, dass das erste Antriebsteil und das zweite Antriebsteil von einem einzigen durch einen gemeinsamen Antrieb drehbar antreibbaren Antriebsteil gebildet sind.

Vorzugsweise ist der erste Antrieb und/oder der zweite Antrieb oder der gemeinsame Antrieb ein Elektromotor.

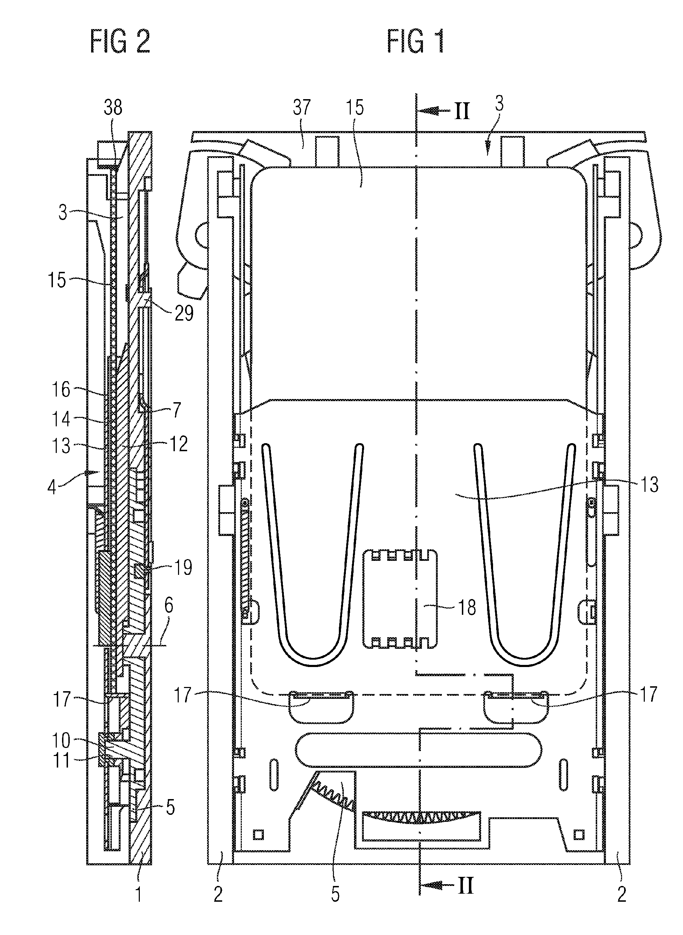

Ein Ausführungsbeispiel der Erfindung ist in der Zeichnung dargestellt und wird im Folgenden näher beschrieben. Es zeigen
- Figur 1: eine Draufsicht auf eine Karteneinzugsvorrichtung
- Figur 2: einen Schnitt entlang der Linie II - II in Figur 1
- Figur 3: eine Draufsicht auf die Transporteinrichtung der Karteneinzugsvorrichtung nach Figur 1 mit entnommener Chipkarte

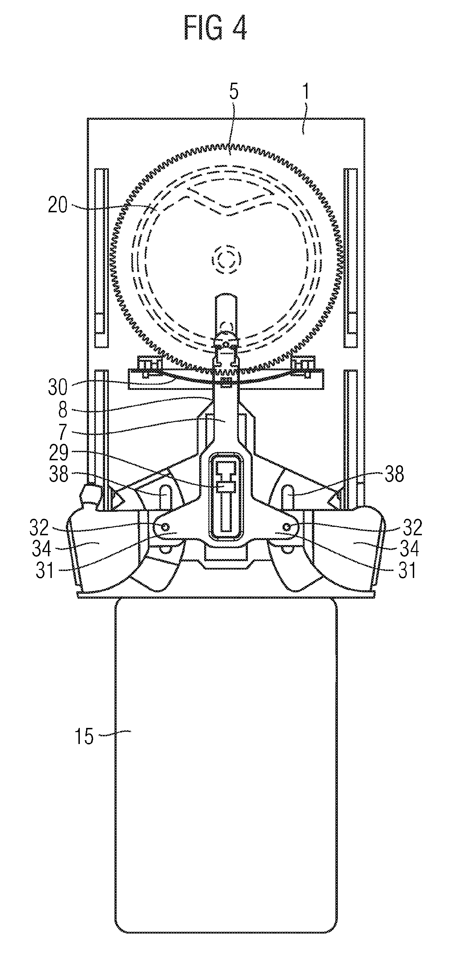

- Figur 4: eine Draufsicht auf die Verriegelungseinheit der Karteneinzugsvorrichtung nach Figur 1 mit entnommener Chipkarte
- Figur 5: eine Draufsicht entsprechend Figur 3 mit eingezogener Chipkarte

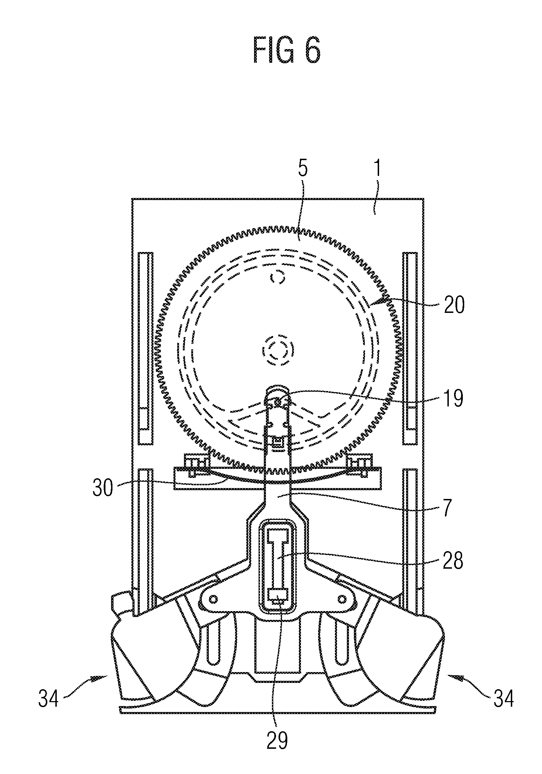

- Figur 6: eine Draufsicht entsprechend Figur 4 mit voll eingezogener Chipkarte

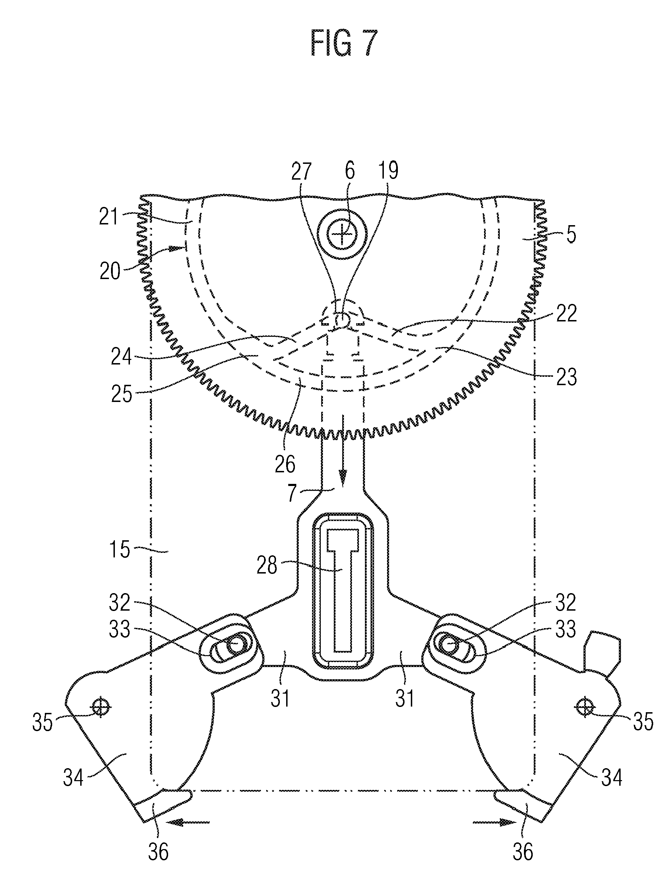

- Figur 7: eine Teildraufsicht der Verriegelungseinheit der Karteneinzugsvorrichtung nach Figur 1 mit voll eingezogener Chipkarte

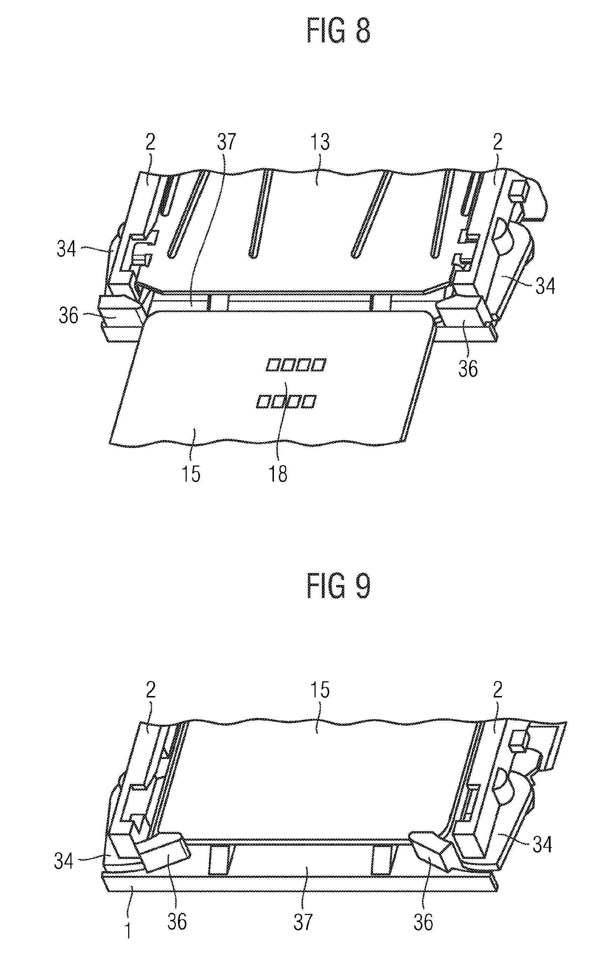

- Figur 8: eine perspektivische Ansicht im Bereich der Aufnahmeöffnung der Karteneinzugsvorrichtung nach Figur 1 mit entnommener Chipkarte
- Figur 9: eine perspektivische Ansicht entsprechend Figur 8 mit voll eingezogener Chipkarte

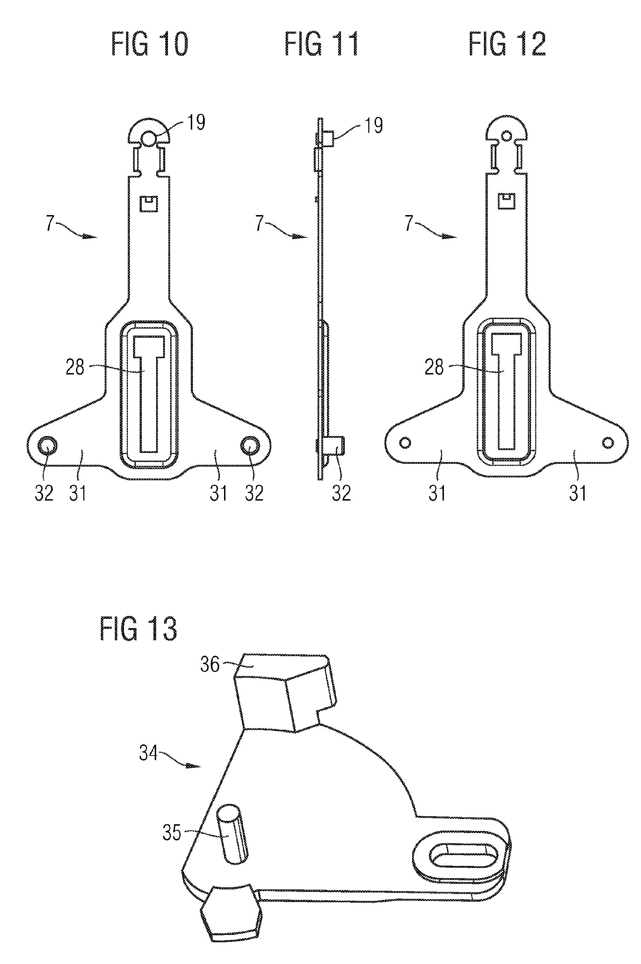

- Figur 10: eine Draufsicht eines Schiebers der Karteneinzugsvorrichtung nach Figur 1
- Figur 11: eine Seitenansicht des Schiebers nach Figur 10
- Figur 12: eine Rückansicht des Schiebers nach Figur 10
- Figur 13: eine perspektivische Ansicht eines Verriegelungsteils der Karteneinzugsvorrichtung nach Figur 1

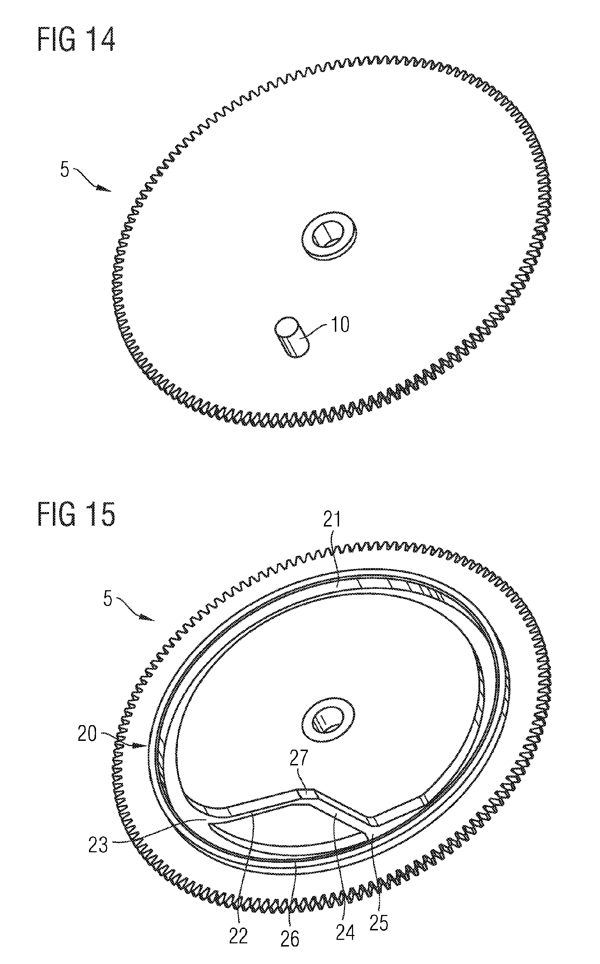

- Figur 14: eine perspektivische Frontansicht eines Antriebszahnrads der Karteneinzugsvorrichtung nach Figur 1
- Figur 15: eine perspektivische Rückansicht des Antriebszahnrads nach Figur 14

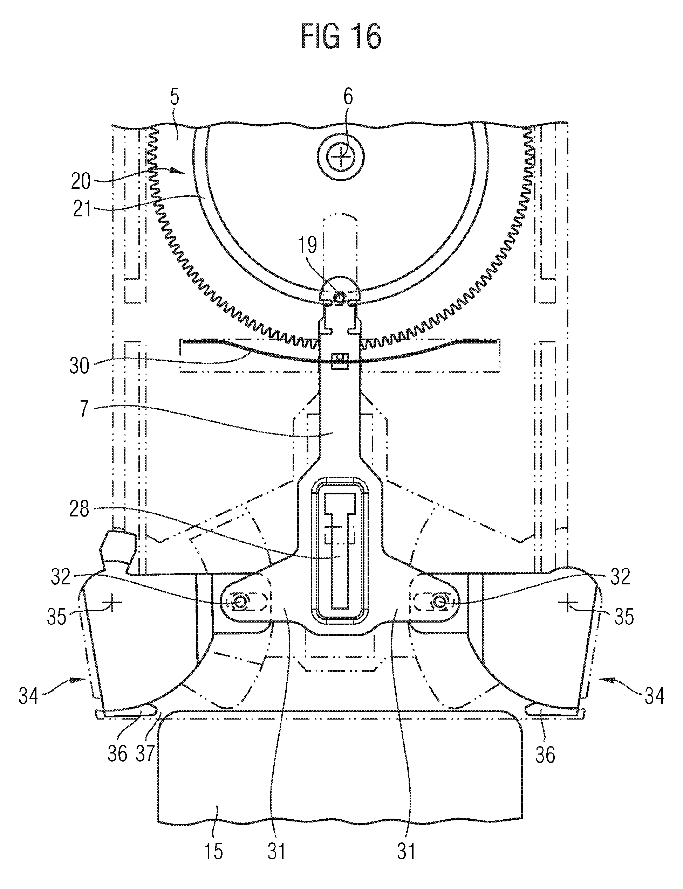

- Figur 16: eine Teilansicht der Verriegelungseinheit nach Figur 4 mit entnommener Chipkarte

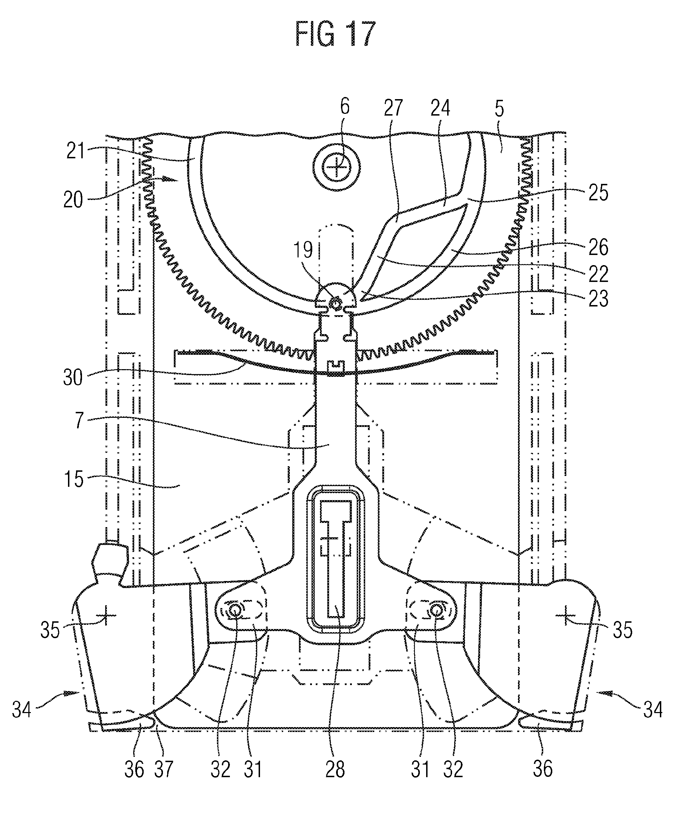

- Figur 17: eine Teilansicht entsprechend Figur 16 mit eingezogener noch unverriegelter Chipkarte

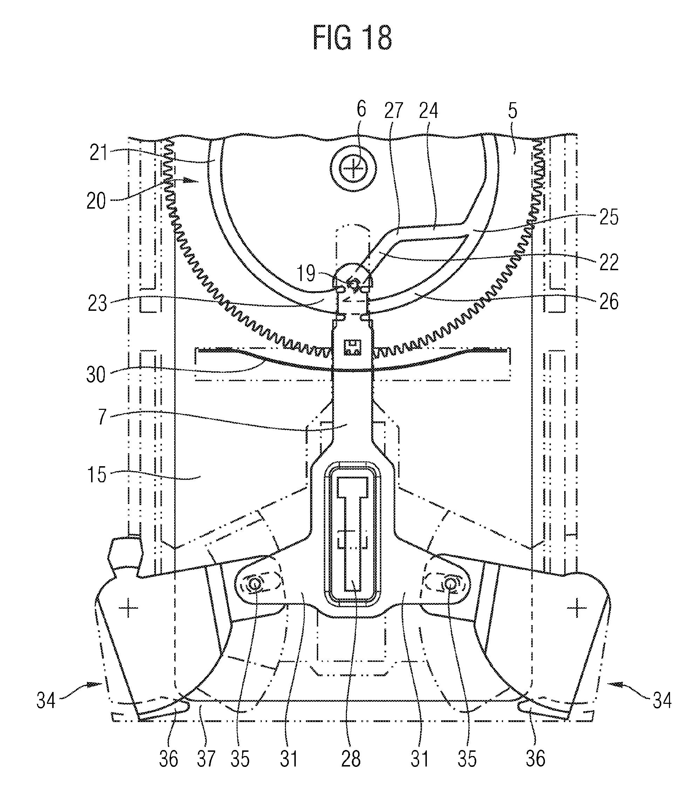

- Figur 18: eine Teilansicht entsprechend Figur 16 mit eingezogener noch teilverriegelter Chipkarte

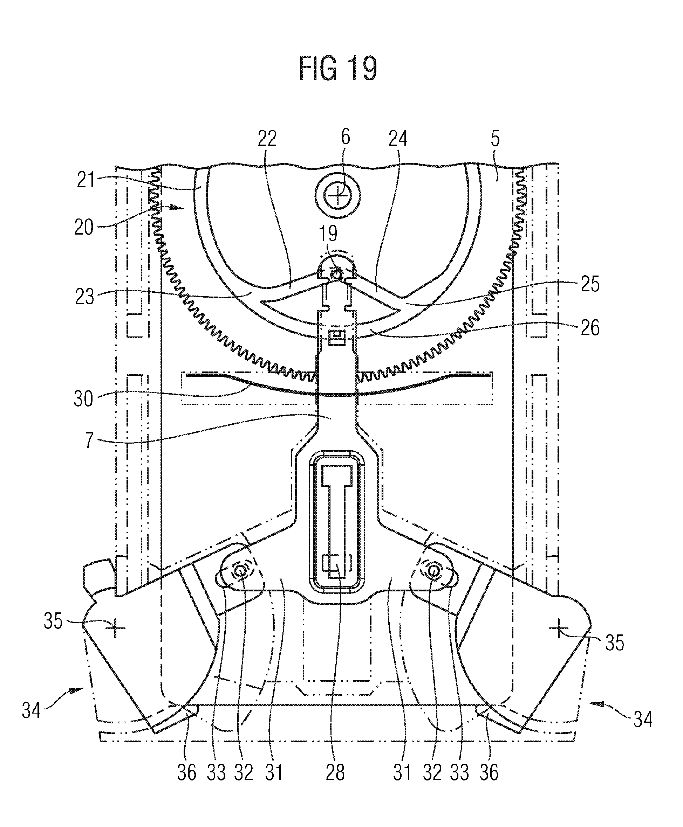

- Figur 19: eine Teilansicht entsprechend Figur 16 mit voll eingezogener und verriegelter Chipkarte

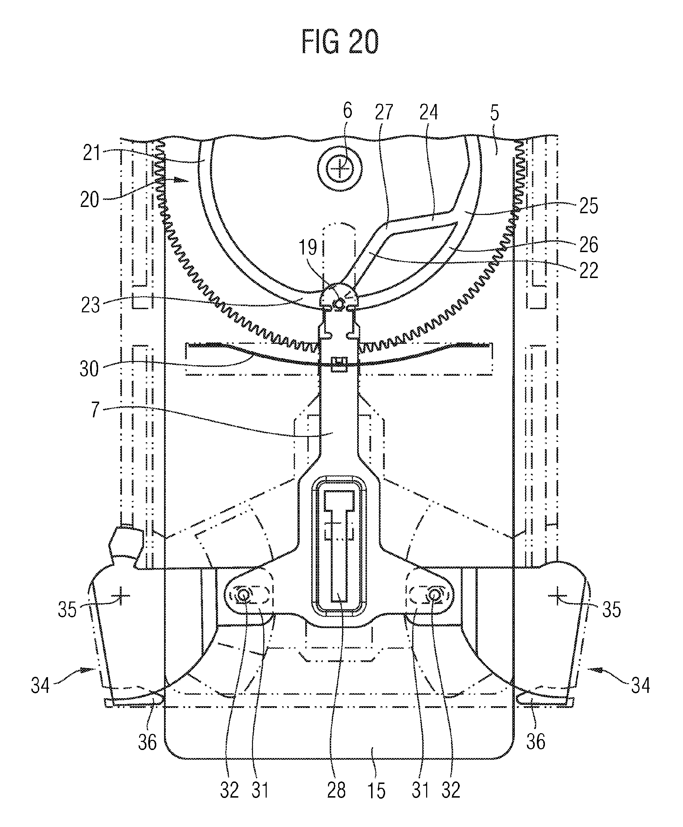

- Figur 20: eine Teilansicht entsprechend Figur 16 mit teilausgeschobener Chipkarte.

Die in den Figuren dargestellten Karteneinzugsvorrichtung für einen Fahrtschreiber eines Kraftfahrzeuges weist eine Trägerplatte 1 mit zwei in einem Abstand darauf angeordneten Seitenführungen 2 auf, die auf der Oberseite der Trägerplatte 1 zwischen sich einen Schacht 3 bilden, in dem eine Transporteinrichtung 4 zwischen einer Ausfahrposition und einer Einzugsposition translatorisch geführt bewegbar ist.

Im hinteren Bereich ist auf der Trägerplatte 1 ein Antriebszahnrad 5 um eine Drehachse 6 drehbar gelagert, in deren Zähne eine nicht dargestellte Zylinderschnecke eingreift, die von einem Elektromotor unidirektional drehbar antreibbar ist, was durch einen Drehrichtungspfeil 9 dargestellt ist.

In einem radialen Abstand von der Drehachse 6 ist an der Oberseite des Antriebszahnrades 5 ein zur Drehachse 6 parallel sich erstreckender zweiter Kurbelzapfen 10 hervorstehend angeordnet, der in eine zweite Kulissenbahn 11 der Transportvorrichtung 4 eingreift, die sich quer zur Erstreckung des Bewegungswegs der Transportvorrichtung 4 im Schacht 3 parallel zur Ebene der Trägerplatte 1 erstreckt.

Die Transportvorrichtung 4 besteht aus einem plattenartigen Unterteil 12 und einem plattenartigen Oberteil 13, die zwischen sich einen Aufnahmeschlitz 14 bilden, in den durch eine Einführöffnung 16 eine Chipkarte 15 bis zur Anlage an Anschlägen 17 der Transportvorrichtung 4 einführbar ist. Dabei sind Unterteil 12 und Oberteil 13 die Dicke des Aufnahmeschlitzes 14 verringernd zueinander bewegbar.

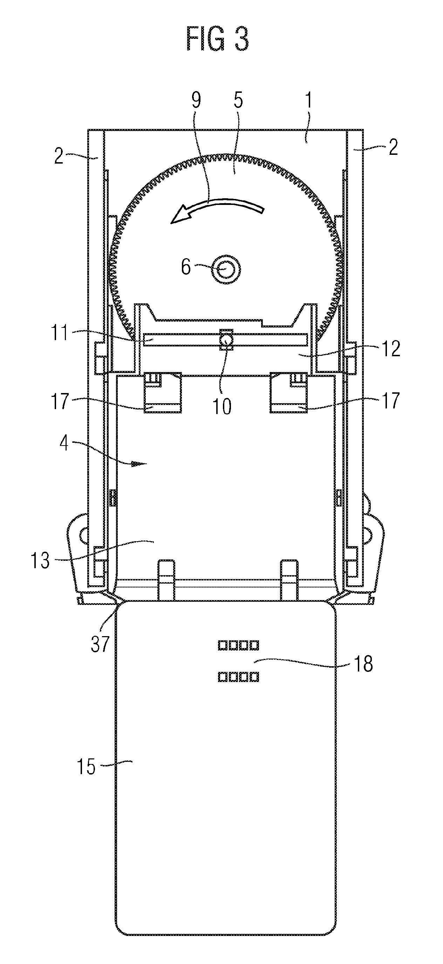

In der in Figur 3 dargestellten Ausfahrposition der Transportvorrichtung 4 befindet sich der Kurbelzapfen 10 in einer der Einführöffnung 16 näheren Mittenposition zwischen den beiden seitlichen Enden der Kulissenbahn 11.

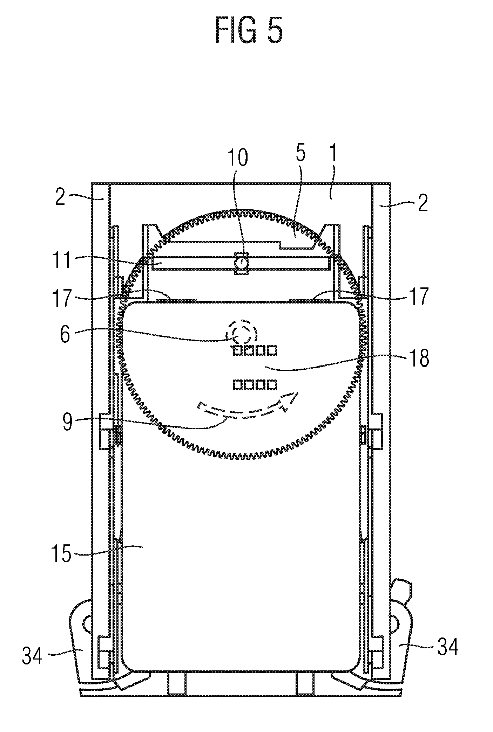

In der in Figur 5 dargestellten vollen Einzugsposition ist das Antriebszahnrad 5 um 180° gedreht, so dass sich dann der zweite Kurbelzapfen 10 in einer der Einführöffnung 16 entfernteren Mittenposition zwischen den beiden seitlichen Enden der zweiten Kulissenbahn 11 befindet.

Durch diese Drehung des Antriebszahnrades 5 um 180° wird durch Wandern des zweiten Kurbelzapfens 10 in der zweiten Kulissenbahn 11 die Transportvorrichtung aus ihrer Ausfahrposition, in der die Chipkarte 15 in den Einführschlitz 16 einführbar ist, in die Einzugsposition bewegt.

Dabei wird auch die Chipkarte 15 in die Einzugsposition bewegt, in der ein auf der Chipkarte 15 angeordneter Datenspeicher 18 mit nicht dargestellten feststehenden Kontakten kontaktiert, so dass die Daten des Datenspeichers 18 in eine ebenfalls nicht dargestellte Lese- und Speichereinheit des elektronischen Fahrtschreibers eingelesen werden können.

Bei weiterer Drehung des Antriebszahnrades 5 und Wandern des zweiten Kurbelzapfens 10 in der zweiten Kulissenbahn 11 wird die Transportvorrichtung 4 wieder in ihre Ausfahrposition bewegt, so dass die Chipkarte 15 wieder entnommen werden kann.

An der Unterseite der Trägerplatte 1 ist zentrisch zum Schacht 3 ein Schieber 7 linear bewegbar geführt angeordnet, der an seinem dem Antriebsrad 5 zugewandten Ende einen hervorstehenden ersten Kurbelzapfen 19 runden Querschnitts aufweist, der in eine erste Kulissenbahn 20 an der Unterseite des Antriebszahnrads 5 eingreift.

Die erste Kulissenbahn 20 besteht aus einer zur Drehachse 6 konzentrischen, sich über einen Winkel von etwa 290° erstreckenden Kreisbahn 21, an die sich ein Verriegelungsbereich 22 anschließt, der von dem ersten Ende der Kreisbahn 21 ausgehend sich zu einem der Drehachse 6 näheren Bereich erstreckt.

Von dem der Kreisbahn 21 entfernten Ende erstreckt sich dann ein Entriegelungsbereich 24 zu dem zweiten Ende 25 der Kreisbahn 21.

Dabei stehen der Verriegelungsbereich 22 und der Entriegelungsbereich 24 unter einem Winkel von etwa 120° V-artig zueinander.

Darüber hinaus sind das erste Ende 23 und das zweite Ende 25 der Kreisbahn 21 durch einen Kreisbahnfortsatz 26 miteinander verbunden.

Die Verbindungsstelle 27 von Verriegelungsbereich 22 und Entriegelungsbereich 24 befindet sich diametral zum zweiten Kurbelzapfen 10 an dem Antriebszahnrad 5.

Der Schieber 7 ist an seinem dem Antriebszahnrad 5 näheren Bereich in einer Führungsnut 8 in der Trägerplatte 1 sowie an seinem der Einführöffnung 16 näheren Bereich durch einen von der Trägerplatte 1 hervorstehenden und in einen sich in Bewegungsrichtung der Transporteinrichtung 4 erstreckenden Führungsschlitz 28 ragenden Führungszapfen 29 verschiebbar geführt.

Durch eine mit ihrem Mittelbereich den Schieber 7 beaufschlagenden und mit ihren Enden an der Trägerplatte 1 fest abgestützten Blattfeder 30 ist der Schieber 7 permanent zur Drehachse 6 hin kraftbeaufschlagt.

An dem dem Antriebszahnrad 5 abgewandten Ende weist der Schieber 7 zwei einander entgegengesetzt zu den Seitenrändern des Schachts 3 gerichtete Schieberarme 21 auf, an deren freien Endbereichen parallel zur Drehachse 6 gerichtete Anlenkzapfen 32 angeordnet sind.

Die Anlenkzapfen 32 greifen in Langlöcher 33 von Verriegelungsteilen 34 ein, die um zur Drehachse 6 parallele feste Verriegelungsachsen 35 an der Trägerplatte 1 schwenkbar gelagert sind.

Dabei erstrecken sich die Langlöcher 39 radial zu den Verriegelungsachsen 35.

In einem radialen Abstand zu den Verriegelungsachsen 35 sind Verriegelungsstücke 36 angeordnet, die durch die Bewegung des Schiebers 7 und die dabei schwenkenden Verriegelungsteile 34 zwischen einer Entriegelungsstellung, in der die Verschlussstücke 36 sich seitlich neben der Aufnahmeöffnung 37 des Schachts 3 befinden, und seine Verschlussstellung vor der Aufnahmeöffnung 37 schwenkbar sind.

Die Anlenkzapfen 32 ragen auf der den Verriegelungsteilen 34 abgewandten Seite der Schieberarme 31 in Führungsnuten 38 der Trägerplatte 1, die sich in Bewegungsrichtung des Schiebers 1 erstrecken.

Bei entnommener Chipkarte 15 ist die Aufnahmeöffnung 37 des Schachts 3 und die Einführöffnung 16 des Aufnahmeschlitzes 14 der Transporteinrichtung 4 von den Verschlussstücken 36 frei, so dass die Chipkarte 15 durch die Einführöffnung 16 in den Aufnahmeschlitz 14 bis zur Anlage an den Anschlägen 17 eingeführt werden kann.

Durch einen nicht dargestellten, diesen Zustand erfassenden Sensor, wird nun der Elektromotor gestartet und über die Zylinderschnecke das Antriebszahnrad entsprechend dem Drehrichtungspfeil 9 um 180° drehbar angetrieben.

Dadurch wird die Transporteinrichtung 4 über den zweiten in die zweite Kulissenbahn 11 eingreifenden Kurbelzapfen 10 in ihre Einzugsposition gezogen.

Gleichzeitig bewegt sich auch der erste Kurbelzapfen 19 in der ersten Kulissenbahn 20.

So lange sich der erste Kurbelzapfen 19 in der Kreisbahn 21 befindet, erfolgt kein Schwenkantrieb der Verriegelungsteile 34.

Erst, wenn der Kurbelzapfen 19 sich durch die Blattfeder 30 beaufschlagt von der Kreisbahn 21 in den Verriegelungsbereich 22 hineinbewegt, erfolgt ein Schwenkantrieb der Verriegelungsteile 34, so dass auf dem letzten Teil der Einzugsbewegung der Chipkarte 15 die Verriegelungsteile 34 mit ihren Verschlussstücken 36 die Chipkarte 15 hintergreifend in den Bereich der Aufnahmeöffnung 37 schwenken und ein manuelles Herausschwenken der Chipkarte 15 sperren.

Soll die Chipkarte 15 wieder regulär entnommen werden, wird wieder der Elektromotor gestartet, der dann das Antriebszahnrad 5 um weitere 180° in Richtung des Drehrichtungspfeils 9 weiterdreht.

Dabei wird der erste Kurbelzapfen 20 über den Entriegelungsbereich 24 wieder zur Kreisbahn 21 bewegt, wodurch die Verriegelungsteile 34 in ihre Entriegelungsstelle schwenken.

In dieser Entriegelungstellung bleiben die Verriegelungsteile 34 auch bei dem anschließenden Bewegen des Kurbelzapfens 20 in der Kreisbahn 21.

Gelangt bei einer Einzugsbewegung die Chipkarte 15 nicht vollständig in ihre Einzugsposition, was z.B. dadurch möglich ist, dass die Bedienperson die Chipkarte 15 festhält, kann der erste Kurbelzapfen 19 sich nicht von der Kreisbahn 21 in den Verriegelungsbereich 22 bewegen, da die Verschlussstücke 36 an den Längsseiten der Chipkarte 15 anschlagen und so die Verriegelungsteile 34 nicht in ihre Verriegelungsstellung schwenken können.

Der erste Kurbelzapfen 19 bewegt sich daher durch den Kreisbahnfortsatz 26 hindurch in das andere Ende der Kreisbahn 21 und in dieser wieder bis in die Ausgangsstellung, die die Ausfahrposition ist.

## Patentansprüche

1. Karteneinzugsvorrichtung, insbesondere für einen Fahrtschreiber in einem Kraftfahrzeug, mit einer Transporteinrichtung, die einen Aufnahmeschlitz mit einer Einführöffnung zur Aufnahme einer Karte aufweist, wobei die Transporteinrichtung in einem eine entsprechend dem Aufnahmeschlitz gerichtete Aufnahmeöffnung aufweisenden Schacht geführt zwischen einer Ausfahrposition und einer Einzugsposition translatorisch durch einen Antrieb bewegbar antreibbar ist, wobei die Karte einen Datenspeicher aufweist, der bei vollständig in dem Schacht befindlicher Karte mit feststehenden Kontakten kontaktierbar und mit einer elektronischen Lese- und Speichereinheit verbindbar ist, mit einer Verriegelungseinheit, die ein Verriegelungselement aufweist, das zwischen einer Entriegelungsstellung und einer Verriegelungsstellung bewegbar ist und durch das mindestens ein Verriegelungsteil zwischen einer Einführstellung und einer Verschlussstellung bewegbar antreibbar ist, wobei durch das bei vollständig in den Schacht eingeführter Karte in der Verschlussstellung befindliche Verriegelungsteil die Aufnahmeöffnung verschlossen und das Verriegelungsteil in der Verschlussstellung arretierbar ist, **dadurch gekennzeichnet, dass** das Verriegelungselement einen in gleicher Bewegungsrichtung wie die Transporteinrichtung (4) linear bewegbar geführten Schieber (7) aufweist, der ein erstes Koppelelement besitzt, das in einer ersten Führungsbahn eines ersten Antriebsteils bewegbar geführt ist, welches um eine sich senkrecht zur Ebene der Karte erstreckende erste Drehachse (6) durch den ersten Antrieb drehbar antreibbar ist, wobei sich die erste Führungsbahn von einem der ersten Drehachse (6) ferneren Bereich zu einem der ersten Drehachse (6) näheren Bereich erstreckenden Verriegelungsbereich (22) aufweist und wobei das Verriegelungsteil (22) an dem Schieber (7) um eine zur ersten Drehachse (6) parallele Anlenkachse schwenkbar angelenkt und um eine zur Anlenkachse parallele feste Verriegelungsachse (35) schwenkbar gelagert ist.

2. Karteneinzugsvorrichtung nach Anspruch 1, **dadurch gekennzeichnet, dass** das Verriegelungsteil (34) ein Verschlussstück (36) aufweist, das zwischen seiner Entriegelungsstellung, in der es sich seitlich neben der Aufnahmeöffnung (37) befindet, in seine Verschlussstellung vor der Aufnahmeöffnung (37) schwenkbar ist.

3. Karteneinzugsvorrichtung nach Anspruch 2, **dadurch gekennzeichnet, dass** in jedem seitlichen Randbereich der Aufnahmeöffnung (37) ein Verriegelungsteil (34) angeordnet ist.

4. Karteneinzugsvorrichtung nach Anspruch 3, **dadurch gekennzeichnet, dass** der Schieber (7) zentrisch zum Schacht (3) angeordnet ist und zwei einander entgegengesetzt zu den Seitenrändern des Schachts (3) gerichtete Schieberarme (31) aufweist, an deren freien Endbereichen die Anlenkachsen angeordnet sind.

5. Karteneinzugsvorrichtung nach Anspruch 4, **dadurch gekennzeichnet, dass** der Schieberarm (31) einen die Anlenkachse bildenden Anlenkzapfen (32) aufweist, der in ein sich radial zur Verriegelungsachse (35) gerichtetes Langloch (33) eingreift.

6. Karteneinzugsvorrichtung nach Anspruch 5, **dadurch gekennzeichnet, dass** das freie Ende des Anlenkzapfens (32) in eine Führungsnut (28) entsprechender Breite eingreift, die sich in Bewegungsrichtung des Schiebers (7) erstreckt.

7. Karteneinzugsvorrichtung nach einem der vorhergehenden Ansprüche, **dadurch gekennzeichnet, dass** das erste Koppelelement ein erster Kulissenstein und die erste Führungsbahn eine erste Kulissenbahn (20) ist, in die das als erster Kurbelzapfen (19) insbesondere runden Querschnitts ausgebildete erste Koppelelement eingreift.

8. Karteneinzugsvorrichtung nach einem der vorhergehenden Ansprüche, **dadurch gekennzeichnet, dass** das erste Antriebsteil ein erstes Antriebszahnrad (5) ist.

9. Karteneinzugsvorrichtung nach einem der vorhergehenden Ansprüche, **dadurch gekennzeichnet, dass** die erste Führungsbahn sich aus einer über einen Winkel größer 90° und kleiner 180° erstreckenden zur ersten Drehachse konzentrischen Kreisbahn sowie dem sich daran anschließenden Verriegelungsbereich besteht, so dass das Verriegelungselement um 180° drehbar ist und das eine Ende der ersten Führungsbahn die Einführstellung und das andere Ende der ersten Führungsbahn die Verschlussstellung definiert, wobei das Verriegelungselement durch den Antrieb reversibel antreibbar ist.

10. Karteneinzugsvorrichtung nach Anspruch 9, **dadurch gekennzeichnet, dass** die Kreisbahn einen Kreisbahnfortsatz aufweist, der die Kreisbahn an ihrem dem Verriegelungsbereich zugewandten Ende auf eine Erstreckung von 180° ergänzt.

11. Karteneinzugsvorrichtung nach einem der Ansprüche 1 bis 8, **dadurch gekennzeichnet, dass** die erste Führungsbahn aus einer sich über einen Winkel größer 180° und kleiner 360° erstreckenden zur ersten Drehachse (6) konzentrischen Kreisbahn (21) sowie dem sich an das eine Ende (23) der Kreisbahn (21) anschließenden Verriegelungsbereich (22) sowie einem Entriegelungsbereich (24) besteht, so dass das Verriegelungselement um 360° drehbar ist, wobei sich an das der Kreisbahn (21) abgewandte Ende des Verriegelungsbereichs (22) der Entriegelungsbereich (24) anschließt und zu dem zweiten Ende (25) der Kreisbahn (21) führt, wobei die Mitte des Verlaufs der Kreisbahn (21) die Einführstellung und der Übergang von dem Verriegelungsbereich (22) zum Entriegelungsbereich (24) die Verschlussstellung definiert und wobei das Verriegelungselement durch den Antrieb unidirektional antreibbar ist.

12. Karteneinzugsvorrichtung nach einem der Ansprüche 11 und 12, **dadurch gekennzeichnet, dass** die Enden (23, 25) der Kreisbahn (21) durch einen Kreisbahnfortsatz (26) miteinander verbunden sind.

13. Karteneinzugsvorrichtung nach einem der Ansprüche 10 und 12, **dadurch gekennzeichnet, dass** der Schieber (7) auf die erste Drehachse (6) zu federbelastet ist.

14. Karteneinzugsvorrichtung nach einem der vorhergehenden Ansprüche, **dadurch gekennzeichnet, dass** die Transporteinrichtung (4) in dem Schacht (3) geführt durch ein um eine zweite Drehachse (6) drehbar antreibbares zweites Antriebsteil bewegbar antreibbar ist.

15. Karteneinzugsvorrichtung nach Anspruch 14, **dadurch gekennzeichnet, dass** das zweite Antriebsteil in einer einzigen Drehrichtung drehbar antreibbar ist und ein zweites Koppelelement aufweist, das in einem Abstand zu der zweiten Drehachse (6) angeordnet ist und entlang einer sich im Wesentlichen quer zur Erstreckung des Bewegungswegs der Transporteinrichtung (4) erstreckenden zweiten Führungsbahn an der Transporteinrrichtung (4) bewegbar geführt ist, wobei sich das zweite Koppelelement in der Ausfahrposition zwischen den beiden Enden der zweiten Führungsbahn befindet.

16. Karteneinzugsvorrichtung nach Anspruch 15, **dadurch gekennzeichnet, dass** sich die zweite Führungsbahn gerade erstreckt.

17. Karteneinzugsvorrichtung nach einem der Ansprüche 14 bis 16, **dadurch gekennzeichnet, dass** das zweite Koppelelement ein zweiter Kulissenstein und die zweite Führungsbahn eine zweite Kulissenbahn (11) ist, in die das insbesondere als zweiter Kurbelzapfen (10) runden Querschnitts ausgebildete zweite Koppelelement bewegbar eingreift.

18. Karteneinzugsvorrichtung nach einem der Ansprüche 14 bis 17, **dadurch gekennzeichnet, dass** das zweite Antriebsteil ein zweites Antriebszahnrad (5) ist.

19. Karteneinzugsvorrichtung nach einem der Ansprüche 1 bis 13 und 14 bis 18, **dadurch gekennzeich - net, dass** das erste Antriebsteil und das zweite Antriebsteil von einem einzigen durch einen gemeinsamen Antrieb drehbar antreibbaren Antriebsteil gebildet sind.

20. Karteneinzugsvorrichtung nach einem der vorhergehenden Ansprüche, **dadurch gekennzeichnet, dass** der erste Antrieb und/oder der zweite Antrieb oder der gemeinsame Antrieb ein Elektromotor ist.
